# EUROPEAN PATENT APPLICATION

(11) **EP 2 000 403 A2**
(43) Date of publication of application: **10.12.2008**
(21) Application number: 08009108.5
(22) Date of filing: 16.05.2008
(51) Int. Cl.: B64B 1/26

(54) **Airship and propulsion unit therefor**

(30) Priority: 18.05.2007 US 938774 P
(71) Applicant: 21st Century Airship Technologies Inc., Newmarket, Ontario L3Y 4X1 (CA)
(72) Inventor: Colting, Hokan S., Newmarket Ontario L3X 1L8 (CA)
(74) Representative: Vossius & Partner

(57) **Abstract**

A ducted propulsion unit for an airship is described, together with a method of using the propulsion unit and an airship including such a propulsion unit. The propulsion unit has a propeller mounted in a duct with at least one port in the wall of the duct downstream of the propeller allowing air flow transverse to the axis of the duct. The duct has a closure to occlude outflow from the rear of the duct, and an additional closure to control flow through each port. Selective operation of one of the ports provides thrust radially to the axis of the duct for control of direction, altitude or attitude of the airship.

## Description

### BACKGROUND OF THE INVENTION

The present invention relates generally to airships. More particularly it relates to propulsion mechanisms for controlling the flight path of such airships.

One of the benefits of airships is that they are buoyant aircraft that typically do not require air speed to stay airborne. Traditional airships with the characteristic elongated hull usually have fins, with rudders and elevators, located at the rear of the hull. At slow speed, as during take-off and landing, there is no longer sufficient airflow over the fins' control surfaces making them ineffectual. Originally airships were equipped only with rearward-thrusting propulsion systems, predominantly driven by propellers, which could be adapted to reverse thrust either by adjusting the propeller pitch or by providing for reversing the rotation of the propeller. Because they could not manoeuvre sideways, they depended upon being pulled, for example by a large ground crew using ropes, in order to be brought up to tethering points. In order to provide thrust to the sides of the craft, various means have been devised for directing the outflowing stream of air, for example using ducted propellers, the ducts having moveable vanes of several configurations.

In U.S. Patent 3,899,992 to Fuller, a ducted-propeller steering device for marine use is described that includes ports disposed at either side of the nozzle or duct that appear to be in line with the plane of the propeller. A rudder is shown that can be used to deflect the fluid outflow from the axial direction relative to the nozzle, but no mechanism closes off the axial fluid outflow. In U.S. Patent 5,205,512 to Rumberger, a fluid control apparatus for helicopters is described that includes a single helical vane that is rotated axially to open one of a plurality of lateral ports. U.S. Patent to F.N. Piasecki describes a shrouded propeller for use on a helicopter having several overlying arcuate segments forming an extendable elbow to deflect a propeller slip stream. However, some of the earlier-described configurations do not provide efficient thrust laterally or vertically and many of them are complex and costly to manufacture and maintain. Moreover, none of the known prior art documents describes a configuration that closes off completely the outflow opening of the duct, and none of them is described for use with an airship.

### SUMMARY OF THE INVENTION

Accordingly, the present invention addresses such issues by providing a thrust producing ducted propulsion unit including a ducted propeller and having at least one adjustably closable port in the wall of the duct downstream of the propeller allowing a controlled portion of the air flow to exit the duct transverse to the axis of the duct, the ports being individually or collectively capable of being closed or opened, and a mechanism capable of opening or closing the rear of the duct substantially completely. As will be described below, it has been found surprisingly that by selecting the distance from the propeller disc to the rear of the duct, a much higher-than-expected proportion of the normal thrust can be diverted through the ports with the rear end of the duct closed off. A plurality of ports can be located as desired around the circumference of the duct downstream of the propeller, for example one each to the left and right sides and one each on the top and the bottom of the duct. It has also been found that the proportion of normal thrust diverted through the ports can be increased by controlling the air speed through the duct. Further, by controlling in combination both the distance from the propeller disc to the rear of the duct and the air speed through the duct, a marked increase can be obtained in the proportion of the normal thrust that is diverted through the ports with the rear of the duct closed off.

The invention further provides an airship comprising a gas envelope containing a buoyant gas and including such a ducted propulsion unit oriented generally parallel to the normally fore and aft axis of the gas envelope that does not require a rudder or elevators for steering, altitude and attitude control. Generally a pair of ducted propulsion units can be disposed either side of the airship. Alternatively a single ducted propulsion unit can be disposed at the rear of an elongated airship that may also reduce drag in normal forward motion.

The invention also provides a method for controlling the flight of an airship having at least one thrust producing ducted propulsion unit attached thereto, each ducted propulsion unit providing for cutting off the rearward horizontal air stream and activating at least one air stream transverse to the duct through at least one port. The method includes the steps of: controlling the altitude and pitch of the airship substantially exclusively by opening at least one of the ports and at least partially closing the rear opening of the duct to provide at least a portion of the outflowing air stream of the ducted propulsion unit away from a rearward horizontal vector, selectively to assist lift, adjust attitude or steer the airship substantially exclusively by varying the relative rearward and transverse airstreams of the ducted propulsion unit to rotate the airship about a vertical axis.

One embodiment of the invention comprises a ducted propulsion unit for an airship, said propulsion unit having a propeller mounted in a duct, said duct having at least one port in the wall of the duct downstream of the propeller allowing air flow transverse to the axis of the duct, said duct having a closure to occlude flow through the rear of the duct, and a second closure to control flow through the port, wherein selective operation of the port provides thrust for directional control radially to the axis of the duct.

In another embodiment, the invention comprises an airship having a fuselage and at least one ducted propulsion unit, said propulsion unit having a propeller mounted in a duct, said duct having at least one port in the wall of the duct downstream of the propeller allowing air flow transverse to the axis of the duct, said duct having a closure to occlude flow through the rear of the duct, and a second closure to control flow through the port, wherein selective operation of the port provides thrust for directional control radially to the axis of the duct.

In yet another embodiment, the invention comprises a method of controlling the flight of an airship having a fuselage and at least one ducted propulsion unit, the ducted propulsion unit having a propeller mounted in a duct, said duct having at least one port in the wall of the duct downstream of the propeller allowing air flow transverse to the axis of the duct, and having a closure to occlude flow through the rear of the duct, and a second closure to control flow through the port, said method comprising the steps of: controlling the altitude and attitude of the airship substantially exclusively by opening at least one of the ports and at least partially closing the rear opening of the duct to provide at least a portion of the air stream of the ducted propulsion unit away from the rearward horizontal; and steering the airship substantially exclusively by varying the relative rearward and transverse airstreams of the ducted propulsion unit to rotate the airship about a vertical axis

In still another embodiment, the invention comprises an airship having a fuselage and at least one drive assembly mounted externally of the fuselage, the drive assembly having a propeller and a duct surrounding the propeller to direct air along the axis of rotation of the propeller, the duct including at least one port in the wall of the duct downstream of the propeller and a first closure to occlude flow through the rear of the duct and a second closure to control flow through at least one port, whereby selective operation of at least one port permits radial vectors to be imposed on the fuselage of the airship by the propulsion unit.

### DESCRIPTION OF THE DRAWINGS

The principles of the various aspects of the invention may better be understood by reference to the accompanying illustrative drawings which depict features of examples of embodiments of the invention, and in which:

FIG. 1 is a plan of an airship viewed from above.

FIG. 2 is a side elevation on the line II-II of a ducted propulsion unit used in the airship of FIG. 1.

FIG. 3 is a plan view along section line III-III of the ducted propulsion unit of FIG. 2.

FIG. 4 is a plan view similar to FIG. 1 of an alternative embodiment of the airship.

### DETAILED DESCRIPTION OF THE INVENTION

In a preferred embodiment of the ducted propulsion unit it has been found that an optimum portion of the thrust can be diverted radially when at least one port is close to or adjacent the rear of the duct. In another preferred embodiment using a 1.8-metre diameter duct; the distance from the disc of the propeller to the rear of the duct is preferably from substantially 90 to 130 percent of the diameter of the duct; a plurality of ports can optionally be disposed at substantially 90°, 180°, 270° and 360° with respect to the vertical direction around the circumference of the duct; a plurality of ports can optionally be disposed at substantially 45°, 135°, 225° and 315° with respect to the vertical direction around the circumference of the duct; the combined areas of the ports is preferably from substantially 30 to 35 percent of the cross-sectional area of the duct; the distance from the disc of the propeller to the rear of the duct is preferably at least substantially 90 percent of the diameter of the duct; finally, the air speed through the duct is preferably from substantially 50 to 70 m/s.

In another preferred embodiment, the invention comprises an airship having a fuselage and at least two drive assemblies, at least one of which is located at each of the fore and aft ends of the airship, each drive assembly having a propeller and a duct surrounding the propeller to direct air along the axis of rotation of the propeller, the duct including at least one port in the wall of the duct downstream of the propeller and a first closure to occlude flow through the rear of the duct and a second closure to control flow through at least one port, whereby selective operation of at least one port permits radial vectors to be imposed on the fuselage of the airship by the propulsion unit

In other preferred embodiments of the airship there can be at least two ducted propulsion units, one disposed on each side of the fuselage.

In yet another preferred embodiment, the ducted propulsion unit can comprise a duct having a diameter up to at least 5 metres and a propeller of a correspondingly large diameter whilst providing proper clearance from the duct. Such large propellers can provide considerably higher static thrust and higher efficiency at lower rotational speeds than smaller propellers having higher rotational speeds. In one test, a 1.8-metre (6-foot) propeller provided 230 N/kW (4 to 5 1b-force/hp) of static thrust, whereas a 4-metre (13-foot) propeller provided almost 700 N/kW (12 1b-force/hp) of static thrust, a much higher efficiency.

The description that follows and the embodiments described therein are provided by way of illustration of examples of particular embodiments of the principles of the present invention. These examples are provided for the purposes of explanation, and not of limitation, of those principles and of the invention. In the description, like parts are marked throughout the specification and the drawings with the same respective reference numerals. The drawings are not necessarily to scale and in some instances proportions may have been exaggerated in order more clearly to depict certain features of the invention.

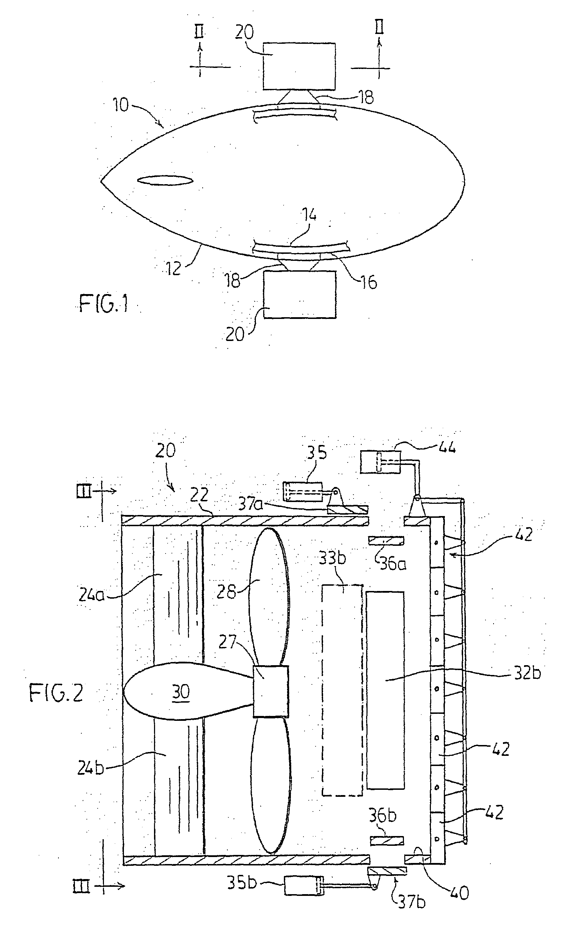

As can be seen in FIG 1, an airship 10 includes a buoyant envelope 12. In a typical non-rigid airship, frame members 14 are used to support propulsion units and which include a pair of outriggers 18 on which a ducted propulsion and motion control assembly 20 is mounted. The frame members 14 are secured to the envelope 12 in a conventional manner to properly secure the assembly 20. Alternatively the propulsion units can be mounted as desirable on other parts of the airship, for example on the cabin. The envelope 12 is arranged to contain a lighter than air gas to provide buoyancy to the airship and the buoyancy can be adjusted by varying the volume of gas in the envelope 12 using well known techniques. Directional control of the airship 10 is provided by selective adjustment of the assemblies 20 as will be described more fully below. It will be appreciated that the details of the airship construction forms no part of the present invention and therefore has not been described in greater detail. Features conventionally incorporated in to such an airship, such as controls, crew accommodation and the like have been omitted for brevity and can take one of many forms well known in the art. A particularly beneficial form of airship is that shown in US patent 5,294,076, the details of which are incorporated herein by reference.

Referring to FIG. 2, the ducted propulsion unit and motion control assembly 20 includes an annular duct 22. At the aft end of duct 22 is an opening 40 through which air flows in normal flight. Supports 24a, 24b and 26a, 26b are provided in the duct 22 to support drive unit 30, which is connected through propeller hub 27 to blades 28. The drive unit 30 rotates the blades 28 to provide controlled forward or reverse thrust as is known in the art. The distance from the disc of the propeller 28 to the rear 40 of the duct 22 is preferably from 90 percent to 130 percent of the diameter of the duct 22.

The duct 22 also includes laterally opening ports 32a, 32b that have gates 33a, 33b respectively to control air flow through the ports 32, and vertically opening ports 36a and 36b, which can be closed off by gates 37a and 37b in a similar manner to laterally opening ports 32a, 32b. As described above, the ports are disposed at 90°, 180°, 270° and 360° to the top of the duct. Optionally, the ports could be disposed diagonally, that is at 45°, 135°, 225° and 315°, thus providing a combination of steering and altitude control from one port.

Under normal forward flight, air flow passes through rear opening 40 to provide forward thrust. As shown in FIG. 2, rear opening 40 can be blocked by gate 42 to cause air to flow through one or more of ports 32a, 32b, 36a, 36b when selected ones of the ports are opened by appropriate means, as will be described more fully below.

When opening 40 is closed off by gate 42, air is forced to flow through any or all of ports 32a, 32b, 36a and 36b, which are adapted to be opened individually or in combination as required. In FIG. 2, gate 33b is shown in a fully open position so that air can flow through the port 32b to provide a lateral thrust of the airship. The vertical ports 36a, 36b are shown closed so that air flow is directed only through the lateral port 32b. If the port 36b is opened a vertical downward thrust is obtained, equalling a lifting force and similarly, if the port 36a is opened a vertical upward thrust is obtained, equalling a downward force. Normally not all of ports 32a, 32b, 36a and 36b are opened simultaneously; such opening would produce thrust in all directions and no controlled movement. However selective opening and closing of the ports 32a, 32b, 36a and 36b permits a vectored drive to be obtained to enhance the manoeuvrability of the airship. It will be appreciated that in some installations the port 32a can be omitted or maintained closed at all times as it is adjacent to the body 12 and thus can offer no appreciable assistance in manoeuvring.

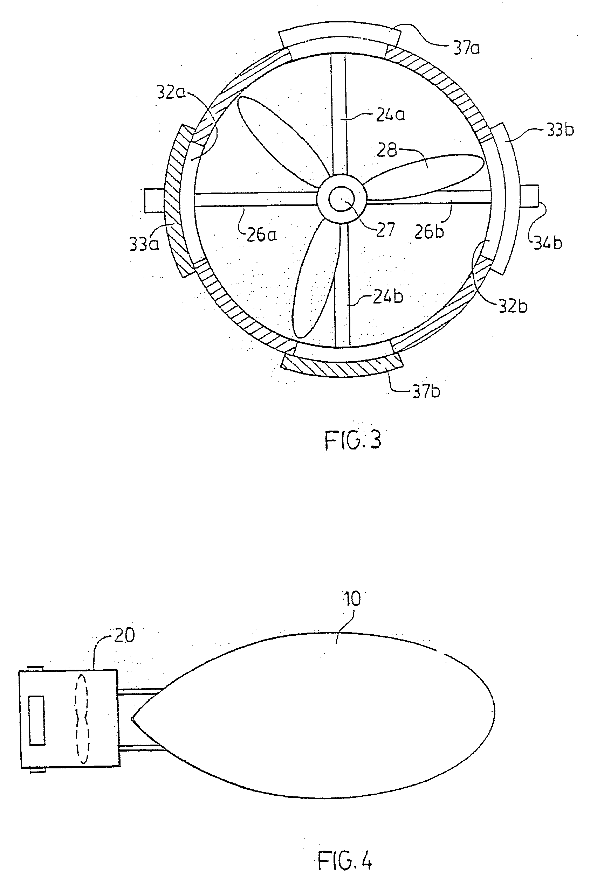

As may be seen in FIG. 2, gate 37b is shown fitted over port 36b and is connected through a fitting 34b to an actuator 35b to control its movement. The actuator 35b, as well as other actuators, can be a hydraulic cylinder, a mechanical actuator or other appropriate mechanism. The fitting 34b can be in any appropriate position to effect the most convenient movement of gate 33b. The openings of ports 32a, 36a and 36b are covered as necessary by similar gates, shown in either open or closed positions in FIG. 2 and FIG 3. The gates 33, 37 can be hinged to the duct to allow pivoting movement under control of the actuator, or can slide axially along the duct 22 among a range of positions from fully open to fully closed.

The gate 42 is formed as a set of louvers 43, 43 that are rotatable about their longitudinal axes between a fully open and fully closed position to control the airflow through the opening 40. The louvers 43 are operated by an actuator 44 whose control can be integrated with that of the gates 33, 37 to provide directional control of the airship 10. The louvers 43, 43 can be disposed on horizontal axes and optionally used with the ports in the closed position to control the pitch of the airship when in normal forward flight. Alternatively, the louvers 43, 43 can be disposed on vertical axes and optionally used with the ports in the closed position to provide steering of the airship when in normal forward flight. This control is accomplished by controlling the positions of the open louvers to deflect the airflow slightly off-axis either vertically to control pitch or horizontally to control steering.

Other forms of gates for closing and opening each of the ports and the rear opening can be used as desired and appropriate. For example a rotatable sleeve can be mounted on the duct 22 so as to cover and uncover in a selective manner the ports 32, 36. Alternatively, a shutter or rolling blind can be utilised with each port to provide individual adjustment if preferred, for example gate 33b fitted to duct 22 and adapted to be moved into and out of closing contact with port 32b by an appropriate driver. Gates 33a, 33b, 37a and 37b are depicted as external to duct 22 in Figures 2 and 3, but can alternatively be mounted internally within duct 22. The gate 42 can optionally be constructed as an iris to progressively restrict the flow or can utilise a pair of doors that swing from an open to closed position.

By using the invention comprising ducted assembly 20, superior thrust diversion is obtained by controlling the position and size of the ports. In an example carried out on a test bed equipped to measure thrust in all three directions, namely fore-and-aft, transversely and vertically, a duct 1.8 metres (6 feet) in diameter was fitted with a three-bladed propeller of slightly less diameter to provide clearance from the duct rotated at 2800 rpm and a port was introduced adjacent the rear outlet of the duct. The distance from the disc of the propeller 28 to the rear opening 40 of the duct was 205 cm (80 inches). The port was 76 centimetres (30 inches) wide and extended 110 cm (43 inches) around the circumference of the duct, an arc of substantially 70 degrees of the circumference. When the rear outlet was fully blocked by a gate and the port opened, surprisingly it was observed that the thrust through the port was substantially 50 percent of the straight-through thrust. Prior airflow calculations had suggested that a 90° directional change of the air flow would be expected to produce only substantially 30 percent of the straight-through thrust. Preferably, where a plurality of ports is used, the area of each port is from 30 to 35 percent of the cross-sectional area of the duct. Normally only one port in each propulsion unit is opened at a time. The distance of 205 cm from the disc of the propeller 28 to the rear opening 40 of the duct combined with the airflow speed of between 50 and 70 m/s created a slight overpressure of 35 to 65 millimetres H₂O over the ambient pressure and achieved a much better thrust diverted through the ports. Preferably, the spacing from the propeller to the rear of the duct is between substantially 90 and 130 percent of the diameter of the duct 20.

The ducted propulsion unit 20 can be placed in various positions on an airship. For example a single ducted propulsion unit can be used in-line with the centre line of the airship, yet directional control in all three dimensions can be obtained. Usefully a pair of ducted propulsion units can be placed symmetrically on either side of the airship as shown in FIG 1, which can control rotation of the airship in addition to directional movement. In both a substantially spherical and an elongated airship, the ducted propulsion units can be placed amidships, whilst in an elongated airship the ducted propulsion units are usefully placed aft of the centre line or close to the rear of the airship. In many cases two ducted propulsion units will be used; however in very long airships it can be convenient to place two pairs of ducted propulsion units, one pair forward of the centre line and one pair aft. Using that configuration either the nose or the tail of a long airship can be moved up, down or sideways preferentially of the other end.

Alternatively, as shown in Figure 4, the propulsion unit 20 can be mounted to the rear of the airship 10.

When mounted at the rear, the ducted propulsion unit 20 can be provided with at least 4 ports 32, 26. The propulsion unit 20 mounted at the rear of the airship 10, providing forward thrust in normally open mode at the rear, steering with side ports or changing pitch and/or altitude with the top or bottom ports open (in the 90°, 180°, 270° and 360° configuration). Alternatively the combination port positions at 45°, 135°, 225° and 315° could be used. This arrangement with a rear mounted duct provides additional benefits as it reduces drag by increasing the velocity of the air in the wake behind the airship.

In the method of the invention for providing desired thrust and direction of motion, an airship has at least one thrust producing ducted propulsion unit having provision for cutting off the rearward horizontal air stream from the propulsion unit and activating at least one air stream transverse to the duct through at least one port.

The method includes the steps of: controlling the altitude and attitude of the airship substantially exclusively by opening at least one of the ports and at least partially closing the rear opening of the duct to provide at least a portion of the air stream of the ducted propulsion unit away from the rearward horizontal; and steering the airship substantially exclusively by varying the relative rearward and transverse airstreams of the ducted propulsion unit to rotate the airship about a vertical axis.

It will be appreciated that because the control of altitude, attitude and/or direction of an airship equipped with at least one ducted propulsion unit is improved by the directional thrust of the ducted propulsion unit, the airship will therefore respond at low airspeeds to directional thrust from the ducted propulsion units. Where a plurality of ducted propulsion units is used the thrust can be varied by adjusting the pitch or rotational speed individually or together to provide high manoeuvrability at low speeds.

The description above is intended to be illustrative rather than restrictive. Variations in the structure and operation of the ducted propulsion unit and the airship of the present invention may be apparent to those skilled in the art of airships and their navigation. Such variations on the invention are intended to form part of the invention insofar as they are within the spirit and scope of the appended claims. For example, although ducted propulsion units with thrust deflection systems using gates have been described, it may be possible to use other means of closing off the ports in order to obtain similar effects and results. It may also be possible to place a ducted propulsion unit within the envelope using ducting within the envelope, either alone or combined with one or more ducted propulsion units outside the envelope.

## Claims

1. A ducted propulsion unit for an airship,
said propulsion unit having a propeller mounted in a duct,
said duct having at least one port in the wall of the duct downstream of the propeller allowing air flow transverse to the axis of the duct,
said duct having a closure to occlude flow through the rear of the duct, and a second closure to control flow through the port,
wherein selective operation of the port provides thrust for directional control radially to the axis of the duct.

2. A ducted propulsion unit as defined in claim 1, wherein the port is adjacent the rear of the duct.

3. A ducted propulsion unit as defined in claim 1, wherein the distance from the disc of the propeller to the rear of the duct is at least 90 percent of the diameter of the duct and preferably from 90 to 130 percent of the diameter of the duct.

4. A ducted propulsion unit as defined in claim 3, wherein the diameter of the duct is from substantially 1.5 metres to 5 metres.

5. A ducted propulsion unit as defined in claim 1, wherein the area of the port is from substantially 30 to 35 percent of the cross-sectional area of the duct.

6. A ducted propulsion unit as defined in claim 1, having a plurality of ports disposed at 90°, 180°, 270° and 360° with respect to the vertical direction around the circumference of the duct.

7. A ducted propulsion unit as defined in claim 1, having a plurality of ports disposed at 45°, 135°, 225° and 315° with respect to the vertical direction around the circumference of the duct.

8. A ducted propulsion unit as defined in claim 5, wherein the combined areas of the ports is from substantially 30 to 35 percent of the cross-sectional area of the duct.

9. A ducted propulsion unit as defined in claim 6, wherein the combined areas of the ports is from substantially 30 to 35 percent of the cross-sectional area of the duct.

10. A ducted propulsion unit as defined in claim 1, wherein the air speed through the duct is from substantially 50 to 70 m/s.

11. An airship having a fuselage and at least one ducted propulsion unit,
said propulsion unit having a propeller mounted in a duct,
said duct having at least one port in the wall of the duct downstream of the propeller allowing air flow transverse to the axis of the duct,
said duct having a closure to occlude flow through the rear of the duct, and a second closure to control flow through the port,
wherein selective operation of the port provides thrust for directional control radially to the axis of the duct.

12. An airship as defined in claim 10 having at least two ducted propulsion units disposed either side of the fuselage.

13. An airship as defined in claim 10 having at least one ducted propulsion unit disposed adjacent the forward end of the airship and at least one ducted propulsion unit disposed adjacent the aft end of the airship.

14. A method of controlling the flight of an airship having a fuselage and at least one ducted propulsion unit, the ducted propulsion unit having a propeller mounted in a duct, said duct having at least one port in the wall of the duct downstream of the propeller allowing air flow transverse to the axis of the duct, and having a closure to occlude flow through the rear of the duct, and a second closure to control flow through the port, said method comprising the steps of:
controlling the altitude and attitude of the airship substantially exclusively by opening at least one of the ports and at least partially closing the rear opening of the duct to provide at least a portion of the air stream of the ducted propulsion unit away from the rearward horizontal; and
steering the airship substantially exclusively by varying the relative rearward and transverse airstreams of the ducted propulsion unit to rotate the airship about a vertical axis

15. An airship having a fuselage and at least one drive assembly mounted externally of the fuselage, the drive assembly having a propeller and a duct surrounding the propeller to direct air along the axis of rotation of the propeller, the duct including at least one port in the wall of the duct downstream of the propeller and a first closure to occlude flow through the rear of the duct and a second closure to control flow through the port, whereby selective operation of the port permits radial vectors to be imposed on the fuselage of the airship by the propulsion unit.
